# FASCICULE DE BREVET EUROPEEN

(11) **EP 3 130 168 B1**
(45) Date de publication et mention de la délivrance du brevet: **10.11.2021**
(21) Numéro de dépôt: 15717048.1
(22) Date de dépôt: 31.03.2015
(51) Int. Cl.: H04W 12/10, H04W 12/033, H04W 12/02, H04W 4/70, H04W 4/00, H04W 84/18

(54) **PROCÉDÉS DE CODAGE ET DÉCODAGE DE TRAMES DANS UN RÉSEAU DE TÉLÉCOMMUNICATION**
VERFAHREN ZUM CODIEREN UND DECODIEREN VON RAHMEN IN EINEM TELEKOMMUNIKATIONSNETZWERK
METHODS FOR ENCODING AND DECODING FRAMES IN A TELECOMMUNICATION NETWORK

(30) Priorité: 09.04.2014 FR 1453141
(43) Date de publication de la demande: 15.02.2017
(73) Titulaire: Actility, 22300 Lannion (FR)
(72) Inventeur: HERSENT, Olivier, F-78430 Louveciennes (FR)
(74) Mandataire: Plasseraud IP
(86) Numéro de dépôt international: PCT/FR2015/050826
(87) Numéro de publication internationale: WO 2015/155440

(56) Documents cités:
- EP-A1- 2 571 306
- WO-A1-2008/059475
- US-A1- 2010 046 443

## Description

### DOMAINE TECHNIQUE DE L'INVENTION

La présente invention appartient au domaine du codage/décodage de données transmises dans un réseau de télécommunication, notamment dans un réseau à bas débit. Elle concerne une méthode exploitant des techniques de chiffrement et de déchiffrement pour réduire la taille de trames transmises.

Cette méthode est particulièrement avantageuse dans le cas de capteurs effectuant des mesures à transmettre à un équipement distant.

### ART ANTERIEUR

Dans le cadre de l'évolution de l'internet des objets (en anglais « Internet of things »), de plus en plus de dispositifs ont besoin d'être connectés, en permanence ou périodiquement, à un réseau de communication. Ces dispositifs nécessitent souvent d'envoyer ou de recevoir une très petite quantité de données, typiquement quelques octets envoyés une fois par heure.

Jusqu'à récemment, ces dispositifs n'ont pas été correctement pris en compte par les réseaux de communication M2M (« Machine to Machine », « communication de machine à machine » en français) existants lorsqu'ils sont étendus:
- les réseaux de données cellulaires, par exemple GPRS (« General Packet Radio Service », « service radio général par paquets » en français) ou 3G (3^{ème} génération), visent généralement une utilisation à haut débit de données. La consommation d'énergie pour les dispositifs sans fil connectés à de tels réseaux les rend généralement inappropriés pour des segments de marché dans lesquels des capteurs à piles (par exemple capteurs pour le gaz ou l'eau) doivent fonctionner sur plusieurs années ;
- les technologies wMBUS (« wireless M-BUS », « M-BUS sans fil » en français) et similaires ont une portée limitée, nécessitant des batteries importantes et coûteuses pour les capteurs.

De nouvelles technologies radio, utilisant des bandes ultra-étroites de fréquences ou des techniques d'étalement de spectre, ont récemment été en mesure de fournir une connectivité étendue (typiquement 1 à 2 km en milieu urbain) pour un débit très faible (typiquement 100 à 1000 bits par seconde) sur les bandes fréquences ISM pour « Industrie, Scientifique et Médical ».

Cependant, le faible débit implique des temps de transmission dans l'air relativement longs tout en mobilisant des ressources spectrales qui sont rares. Il devient donc essentiel à la réussite de ces réseaux bas débit M2M de réduire autant que possible la taille des trames de données transmises. La taille des trames dépend assez fortement des en-têtes relatifs aux couches de liaison et réseau, spécialement quand le dispositif n'a à transmettre qu'une faible quantité de données lorsqu'il envoie une trame. Le nombre maximum de capteurs par cellule dépend directement de la taille des trames transmises:
- les réseaux à faible débit sont souvent non-synchronisés et nécessitent un taux d'occupation faible du canal afin de maintenir des taux de collisions faibles et afin de fonctionner correctement (typiquement occupation du canal en dessous de 5%). Le taux d'occupation du canal est proportionnel au nombre de messages envoyés par unité de temps, et à la taille de la trame transmise ;
- dans de nombreux pays, la réglementation du spectre ISM impose que chaque antenne transmette moins qu'un pourcentage de temps donné (typiquement environ 1%). C'est généralement le facteur de limitation dominant des réseaux bidirectionnels. Là encore, le taux d'occupation du temps d'antenne des stations de base est proportionnel au nombre de messages envoyés par l'antenne par unité de temps, et à la taille de la trame transmise.

Un exemple de système d'optimisation actuel pour une utilisation efficace à bas débit est le réseau 6LoWPAN pour « IPv6 Low power Wireless Personal Area Networks » en anglais (réseaux IPv6 basse puissance sans-fil sur une zone personnelle). Un tel réseau s'appuie sur l'état partagé entre les extrémités et le coordinateur du réseau, et exploite également les redondances entre la couche MAC (« Medium Access Control », « contrôle d'accès au support » en français) et la couche IP (« Internet Protocol », « protocole internet » en français).

Dans la couche MAC, les mécanismes d'optimisation comportent des espaces d'adressage des capteurs plus petits (par exemple 16 bits au lieu de 64 bits), mais cela a pour conséquence de réduire le nombre possible de capteurs dans le réseau.

Toutefois, de tels systèmes n'exploitent pas les redondances entre les différents champs de PDU (« protocol data unit », « unité de données de protocole » en français), au sein d'une couche OSI (« open system interconnection », « interconnexion de systèmes ouverts » en français) donnée.

La redondance d'information existant entre deux trames de données successivement décodées n'est pas non plus exploitée.

De plus, ces systèmes sont conçus pour fournir une décompression sans ambiguïté de chaque élément d'une trame de données. En effet, toutes les informations nécessaires au décodage de la totalité des données sont directement comprises dans une trame. Un procédé de décompression particulier est usuellement prévu pour chaque élément de la trame.

Enfin dans les techniques existantes les procédés d'émission/réception employés mettent à profit de manière limitée la diversité d'informations issues des signaux reçus. Typiquement ces informations sont uniquement utilisées pour organiser une migration d'une cellule de réception vers une autre (procédure dite de « handover »).

L'état de la technique est par exemple connu de par le document US2010/046443 A1.

### RESUME DE L'INVENTION

Le système proposé vise à réduire la taille globale des trames pour des communications M2M sans fil à bas débit et à en optimiser le fonctionnement dans un contexte de fortes contraintes sur le débit, le temps d'occupation des canaux de transmission et sur le volume des informations échangées.

L'invention est définie par les revendications indépendantes.

L'invention propose un procédé de réception d'une trame de données émise dans un réseau relié à plusieurs nœuds, dans lequel une adresse et un secret sont respectivement affectés à chaque nœud, le procédé comprenant :
- extraire de la trame des données chiffrées et un code de hachage de trame ;
- consulter une base de données ayant des enregistrements respectifs concernant les nœuds, l'enregistrement concernant un nœud contenant des informations incluant l'adresse et le secret affectés à ce nœud ;
- pour au moins un enregistrement de la base de données :
   - calculer au moins un code de hachage à partir d'éléments comprenant les données chiffrées extraites de la trame et le secret contenu dans l'enregistrement ;
   - comparer le code de hachage calculé avec le code de hachage de trame extrait de la trame ; et
   - sélectionner l'enregistrement si les codes de hachage comparés coïncident ;
- et traiter la trame.

Le traitement comprend une identification de l'adresse contenue dans l'enregistrement sélectionné comme étant l'adresse affectée au nœud d'où provient la trame, et un déchiffrement des données chiffrées extraites de la trame à l'aide du secret contenu dans l'enregistrement sélectionné.

On entend par « nœud » un dispositif d'acquisition de données, associé au moins à une station de radiocommunication.

Le code de hachage, classiquement utilisable pour vérifier l'intégrité de la trame, est ici exploité aussi pour contribuer à l'identification de l'adresse du dispositif ayant émis la trame. Ainsi, une réduction de la taille des entêtes est rendue possible puisque l'adresse n'a plus besoin d'être entièrement transmise dans l'en-tête.

Le plus drastique est de ne plus inclure du tout d'adresse dans l'en-tête, mais ceci peut requérir l'exploration d'une base de données de taille trop importante par le système de télécommunication en charge de la réception de la trame.

Un compromis raisonnable entre la minimisation de la taille de la trame et la charge imposée au système en charge de la réception de la trame est de tronquer l'adresse incluse dans l'entête. Par exemple, il est possible de réduire la taille du champ d'adresse de l'en-tête à 16 bits au lieu de 32. Ainsi, dans un mode de réalisation, une donnée d'adresse incomplète est en outre extraite de la trame, et les étapes de calcul et de comparaison du code de hachage sont exécutées pour les enregistrements de la base de données contenant une adresse correspondant à la donnée d'adresse incomplète extraite.

Les éléments pour le calcul du code de hachage pour un enregistrement de la base de données peuvent comprendre une partie au moins de l'adresse contenue dans ledit enregistrement.

Dans un mode de réalisation, les informations contenues dans l'enregistrement de la base de données concernant un nœud incluent en outre des informations de pointage d'au moins un numéro de séquence d'une trame qui a été reçue et traitée en identifiant l'adresse contenue dans l'enregistrement. Dans ce mode de réalisation, les éléments à partir desquels au moins un code de hachage est calculé comprennent en outre un entier déterminé selon les informations de pointage contenues dans l'enregistrement.

Ainsi, les informations déduites du décodage des trames précédentes peuvent être réutilisées pour la trame courante. Le numéro de séquence d'une dernière trame a été préalablement stocké lors du décodage de celle-ci, et peut lors du décodage d'une nouvelle trame être lu afin de repérer un numéro de séquence, ou une plage de numéros de séquence si des pertes de trame sont possibles, devant être essayé(s) dans les étapes de calcul et de comparaison de codes de hachage. Ceci permet de faire connaître au système en charge de la réception de la trame le numéro de séquence de la trame courante sans avoir eu à l'inclure dans les informations explicitement fournies dans la trame.

Le traitement de la trame peut ainsi comprendre une détermination d'un numéro de séquence de la trame parmi une séquence de trames émises depuis l'adresse identifiée, et une mise à jour des informations de pointage contenues dans l'enregistrement sélectionné en fonction du numéro de séquence déterminé de la trame.

Dans un mode de réalisation particulier, les étapes de calcul et de comparaison du code de hachage sont exécutées plusieurs fois pour au moins un enregistrement de la base de données. Ces étapes sont exécutées avec des entiers respectifs choisis dans un intervalle repéré par les informations de pointage contenues dans l'enregistrement. Dans ce mode de réalisation, après sélection d'un enregistrement de la base de données, la détermination du numéro de séquence de la trame comprend une identification de l'entier pour lequel les codes de hachage comparés coïncident.

La taille de l'intervalle repéré par les informations de pointage contenues dans l'enregistrement peut varier en fonction des capacités de calcul utilisées pour la mise en œuvre du procédé selon l'invention.

Dans un autre mode de réalisation, une évaluation d'un niveau de puissance et/ou d'une information d'horodatage de la trame est effectuée. Le traitement de la trame comprend alors une mise à jour, dans l'enregistrement concernant le nœud dont l'adresse a été identifiée, d'une information de puissance en fonction du niveau de puissance évalué et/ou de l'information d'horodatage.

On entend par information d'horodatage toute information relative aux aspects temporels de la transmission des trames. De telles informations peuvent avoir trait au temps de transmission des trames, aux instants de réception, etc.

Typiquement, un tel niveau de puissance peut être un rapport signal sur bruit du signal reçu, une énergie ou une puissance moyenne calculée sur l'intervalle de temps correspondant à la réception de la trame. Ces informations sont liées à l'antenne ayant reçu le signal. Le système en charge de la réception de la trame peut comprendre plusieurs antennes et plusieurs antennes peuvent recevoir une même trame. Ainsi, dans un mode de réalisation, l'enregistrement concernant le nœud dont l'adresse a été identifiée comprend une information de puissance en fonction du niveau de puissance évalué et/ou de l'information d'horodatage pour chacune des antennes ayant reçu la trame.

Dans un autre mode de réalisation, un message d'adaptation d'au moins un paramètre d'émission du nœud dont l'adresse a été identifiée est transmis par le système en charge de la réception de la trame à ce nœud. Ce message d'adaptation est généré en fonction d'informations comprises dans l'enregistrement concernant ce nœud dont l'adresse a été identifiée.

On entend par paramètre d'émission toute caractéristique variable influant sur les conditions de transmission du signal émis par le nœud. Ainsi, le message d'adaptation peut contenir une instruction pour modifier au moins un élément parmi le canal d'émission, la puissance d'émission, le facteur d'étalement de spectre et la redondance du codage.

La gestion de l'activité des nœuds est ainsi rationalisée. En effet, le message d'adaptation étant généré en fonction d'informations précises sur les conditions de transmission des trames entre nœuds et l'ensemble des systèmes, il est possible de générer des messages d'adaptation très pertinents. Gérés de manière globale, ces messages d'adaptation permettent par exemple de maximiser la capacité d'accueil du réseau ou encore de réduire la consommation énergétique globale du système. Par exemple, un nœud pour lequel la puissance évaluée est élevée peut recevoir un message d'adaptation pour la réduction de sa puissance émise afin de ne pas consommer trop d'énergie et de ne pas encombrer inutilement le réseau.

L'enregistrement concernant le nœud dont l'adresse a été identifiée peut en outre avantageusement comporter au moins un des éléments ci-après :
- une indication sur l'emplacement géographique des nœuds, une telle indication pouvant avantageusement être déduite ou estimée à partir des données relatives à la puissance et/ou aux informations d'horodatage;
- une durée d'attente et de périodicité de réception d'acquittement spécifique à un nœud. Le nœud peut se mettre en veille pour la réception d'un message d'acquittement pendant une durée prédéterminée suite à l'émission de la trame. La durée d'attente, éventuellement spécifique à un nœud, peut donc correspondre à cette durée prédéterminée de veille. Le système en charge de la réception de la trame et responsable de l'émission des acquittements peut donc émettre les acquittements aux moments précis où les nœuds concernés par l'acquittement sont susceptibles d'écouter. Ceci rend possible une allocation précise du temps d'occupation du canal de transmission prévu pour les acquittements. Pour des fréquences très contraintes en temps d'occupation, tel que le spectre ISM, cette optimisation du temps d'occupation est particulièrement avantageuse.

L'invention a en outre pour objet un procédé d'émission d'une trame de données par un nœud, une adresse et un secret étant affectés au nœud, le procédé comprenant :
- chiffrer des données au moyen du secret affecté au nœud ;
- générer un code de hachage à partir d'éléments comprenant les données chiffrées et le secret affecté au nœud ; et
- inclure les données chiffrées et le code de hachage généré dans la trame émise

Dans un mode de réalisation, le procédé comporte en outre :
- tronquer l'adresse affectée au nœud pour former une donnée d'adresse incomplète ; et
- inclure la donnée d'adresse incomplète dans la trame émise.

Dans un mode de réalisation particulier, l'adresse affectée au nœud pour former une donnée d'adresse incomplète est sur 32 bits et est tronquée pour former la donnée d'adresse incomplète de taille 16 bits.

Dans un mode de réalisation, les éléments à partir desquels le code de hachage est calculé comprennent en outre un numéro de séquence de la trame émise, ce numéro de séquence de la trame émise étant exclu de la trame émise.

Dans un mode de réalisation, le nœud se met en veille pour la réception d'un message d'acquittement pendant une durée prédéterminée suite à l'émission de la trame. Cette durée prédéterminée correspond avantageusement au temps de traitement (typiquement de l'ordre de la seconde) requis par le système en charge de la réception de la trame pour traiter la trame émise par le nœud et pour envoyer un acquittement relatif à cette trame. Typiquement cette durée est d'une seconde.

Cette mise en veille peut être effectuée de manière périodique. Par exemple, le nœud peut se mettre en veille toutes les deux secondes pendant une seconde. Ainsi, les contraintes imposées par la réglementation du spectre ISM sont avantageusement respectées sans effort de gestion supplémentaire. En effet, dans cette situation, les antennes du système en charge de la réception de la trame ne transmettent que lorsque la fenêtre d'écoute d'un nœud est ouverte (lorsque ce nœud n'est pas en veille). Ceci a pour effet de réduire sensiblement le pourcentage de temps occupé pour les transmissions. On rappelle ici que ce pourcentage de temps autorisé pour les transmissions est typiquement d'environ 1% pour le spectre ISM.

L'invention vise aussi un programme informatique comportant des instructions pour la mise en œuvre du procédé décrit ci-avant.

L'invention peut être mise en œuvre par une unité de traitement et d'optimisation pour communiquer avec plusieurs nœuds, l'unité de traitement et d'optimisation comprenant :
- une interface avec une base de données ayant des enregistrements respectifs concernant les nœuds, l'enregistrement concernant un nœud contenant des informations incluant une adresse et un secret affectés audit nœud ;
- une unité d'extraction pour recevoir une trame de données et en extraire des données chiffrées et un code de hachage de trame ;
- un vérificateur de code agencé pour effectuer les opérations suivantes pour au moins un enregistrement de la base de données :
   - calculer au moins un code de hachage à partir d'éléments comprenant les données chiffrées extraites de la trame reçue et le secret inclus dans les informations dudit enregistrement ;
   - comparer le code de hachage calculé avec le code de hachage de trame extrait de la trame reçue ; et
   - sélectionner ledit enregistrement si les codes de hachage comparés coïncident ;
- et une unité de déchiffrement de la trame reçue pour exécuter un traitement comprenant une identification de l'adresse contenue dans l'enregistrement sélectionné comme étant l'adresse affectée au nœud d'où provient la trame reçue, et un déchiffrement des données chiffrées extraites de la trame reçue à l'aide du secret contenu dans l'enregistrement sélectionné.

L'invention peut également être mise en œuvre par un système pour communiquer avec plusieurs nœuds, le système comprenant :
- une pluralité d'antennes pour la réception de signaux en provenance desdits nœuds, lesdits signaux comportant des trames de données ; et
- l'unité de traitement et d'optimisation décrite ci-avant pour le traitement des trames de données.

Ainsi, les étapes de traitement des trames de données, coûteuses en termes de ressources de calculs sont avantageusement centralisées. Par ailleurs, un élément discriminant en termes de rapidité de traitement est celui de la connexion entre la base de données et l'unité en charge du déchiffrement des trames. En effet, l'unité en charge du traitement doit parcourir l'ensemble des enregistrements de la base de données afin d'identifier l'adresse du nœud ayant émis la trame. Un accès direct et rapide entre une unité de traitement et d'optimisation qui est centrale et la base de données est plus aisé à mettre en œuvre, ce qui réduit sensiblement le temps de traitement des trames.

L'invention peut également être mise en œuvre par un nœud pour communiquer sur un réseau ayant au moins un système, une adresse étant affectée au nœud et un secret étant en outre affecté au nœud, le nœud comprenant :
- une unité de chiffrement de données au moyen du secret affecté au nœud ;
- un générateur de code de hachage, le code de hachage étant généré à partir d'éléments comprenant les données chiffrées et le secret affecté au nœud ; et
- un générateur de trame à émettre, la trame incluant les données chiffrées et le code de hachage généré.

Dans un mode de réalisation, la trame comprend en outre une donnée d'adresse incomplète obtenue en tronquant l'adresse affectée au nœud.

### BREVE DESCRIPTION DES DESSINS

D'autres avantages et caractéristiques de l'invention apparaîtront à la lecture de la description détaillée ci-après, d'exemples de réalisation de l'invention et à l'examen des dessins sur lesquels :
- la figure 1A est une vue d'ensemble d'un exemple de nœud apte à mettre en œuvre l'invention,
- la figure 1B est une vue d'ensemble d'un exemple de système apte à mettre en œuvre l'invention,
- la figure 1C est une vue d'ensemble d'un dispositif d'interface réseau, apte à mettre en œuvre l'invention,
- la figure 1D est une vue d'ensemble d'une unité de traitement et d'optimisation apte à mettre en œuvre l'invention,
- la figure 2 illustre schématiquement les étapes d'un procédé d'émission d'une trame selon l'invention, dans un exemple de réalisation,
- la figure 3 illustre schématiquement les étapes d'un procédé de réception apte à mettre en œuvre l'invention, dans un exemple de réalisation, et
- la figure 4 est un organigramme montrant un exemple de réalisation de l'identification d'un nœud dans un exemple de procédé de comparaison de codes de hachage apte à mettre en œuvre l'invention.

### DESCRIPTION DETAILLEE

L'invention est décrite ci-après dans son application, non limitative, aux réseaux de capteurs et d'actuateurs. Les capteurs sont par exemple des appareils de géolocalisation d'objets ou de personnes, des instruments de mesure pour un réseau de distribution d'eau ou de gaz, des appareils de mesure de la qualité de l'air ou de mesure de bruit, des tickets électroniques de parking, etc. Ces capteurs ou actuateurs sont intégrés ou reliés à des stations de radiocommunication. Un capteur ou actuateur associé à une station de radiocommunication est appelé ici un « nœud ».

Le procédé décrit ici concerne la communication de trames de signal numérique depuis les nœuds vers des serveurs applicatifs, et depuis des serveurs applicatifs vers les nœuds. On appelle « système » l'ensemble des dispositifs compris entre les serveurs applicatifs et les nœuds, les serveurs applicatifs et les nœuds étant exclus dudit système.

On notera que des communications peuvent avoir lieu dans les deux sens entre les nœuds et les serveurs applicatifs. On appelle communication en voie montante une communication émise par un nœud, à destination d'un système opérant en tant que récepteur réseau pour les serveurs applicatifs. On appelle communication en voie descendante une communication, émise par un système opérant en tant qu'émetteur réseau pour les serveurs applicatifs, à destination d'un nœud.

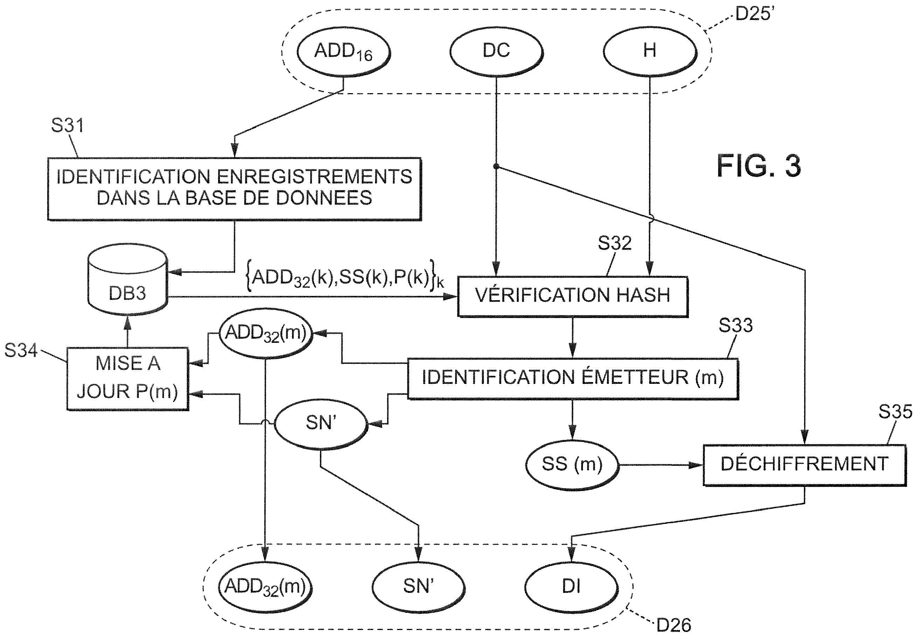

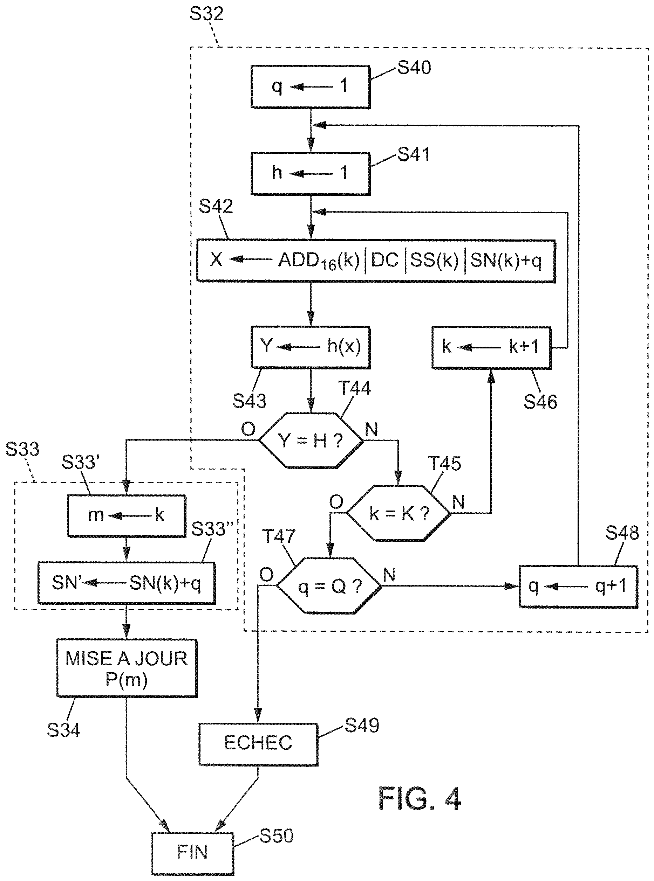

Dans un mode de réalisation, le système comporte uniquement un ensemble d'antennes et d'interfaces réseau avec les serveurs applicatifs. Chaque antenne est reliée à une interface réseau qui effectue les étapes de déchiffrement des trames décrites ci-après en référence aux figures 3 et 4.

Dans un autre mode de réalisation, le système comporte un ensemble d'antennes et d'interfaces réseau qui sont gérés par une ou plusieurs unités de traitement et d'optimisation. Ces unités de traitement et d'optimisation effectuent notamment les étapes de déchiffrement des trames décrites ci-après en référence aux figures 3 et 4. L'unité de traitement et d'optimisation est distincte des antennes et des interfaces réseaux. Cette unité de traitement et d'optimisation est reliée aux interfaces réseaux via un canal de communication. Les interfaces réseaux ont ici la charge d'étapes classiques relatives à la mise en forme d'un signal radio. L'invention est décrite ci-après en référence à ce mode de réalisation.

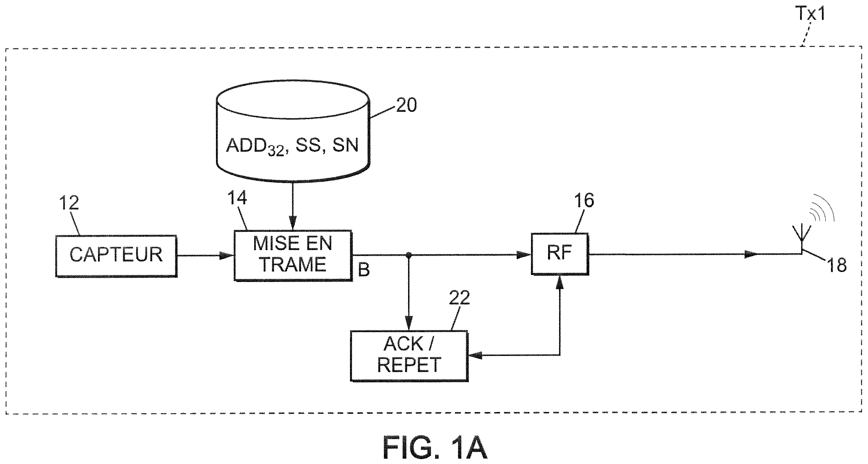

En référence à la figure 1A, un capteur 12 fournit des données d'intérêt au sein d'un nœud Tx1. Une adresse ADD₃₂, par exemple de 32 bits, et un secret SS sont affectés au nœud Tx1. D'autres secrets, uniquement connus du nœud, peuvent être utilisés par ce nœud pour l'encodage des données applicatives. En sortie du capteur 12, les données d'intérêt sont fournies à un processeur 14 qui assure la construction des trames à émettre.

Les adresses ADD₃₂ identifient les nœuds au sein du réseau. Le secret SS n'est connu que du nœud auquel il est affecté, et il est en outre enregistré, en relation avec l'adresse correspondante, dans une base de données DB3 accessible seulement aux unités de traitement et d'optimisation habilités du réseau. Les secrets applicatifs, s'ils sont présents, ne sont connus que des serveurs applicatifs.

Le processeur 14 du nœud Tx1 traite les données d'intérêt pour produire un signal numérique B composé de trames. Un étage d'émission-réception radiofréquence (RF) 16 du nœud Tx1 reçoit chaque trame en provenance du processeur 14 pour mettre en forme, moduler et amplifier, de façon connue en soi, un signal radio adapté à la communication M2M sans fil à bas débit. Ce signal radio est émis via une antenne 18 du nœud Tx1.

Le processeur 14 du nœud Tx1 du réseau accède à une mémoire locale 20 où sont enregistrés l'adresse ADD₃₂ du capteur dans le réseau et son secret associé SS. Cette mémoire 20 contient en outre un numéro de séquence SN de la dernière trame que le processeur 14 a générée. Les trames que produit un nœud sont numérotées consécutivement, ce qui permet aux unités de traitement et d'optimisation de replacer chaque trame reçue dans la séquence.

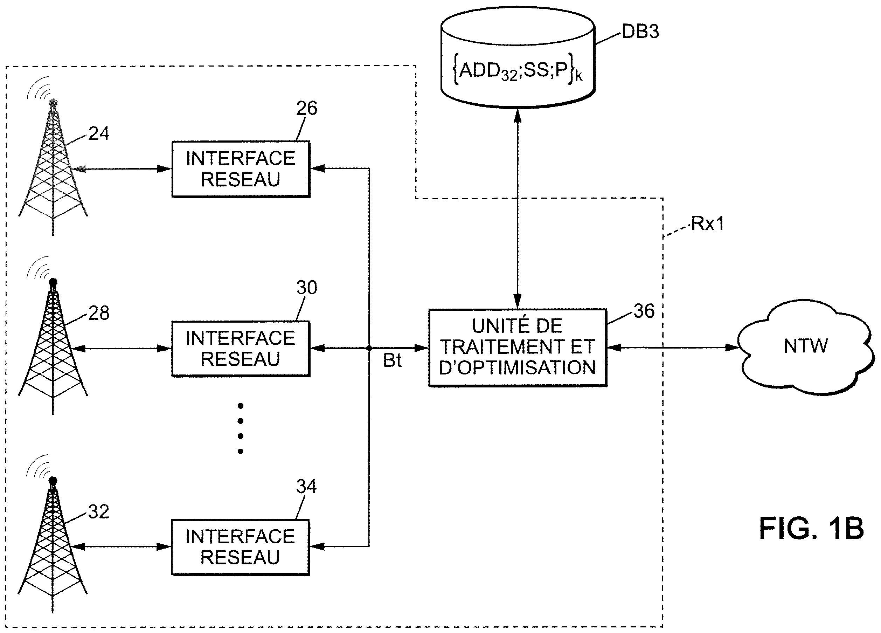

L'exemple de système Rxl montré sur la figure 1B comporte plusieurs antennes réseau 24, 28, 32 qui captent des signaux radio et qui sont respectivement reliées à des interfaces réseau 26, 30, 34. Ces interfaces réseau traitent les signaux radio pour produire des trames numériques comprises dans un signal Bt. Les trames du signal Bt sont similaires, aux erreurs de transmission près, à des trames numériques comprises dans les signaux B de nœuds distants. Ces trames sont ensuite appliquées à une unité de traitement et d'optimisation 36 qui délivre des données déchiffrées. Ces données peuvent être envoyées à un ou plusieurs serveurs d'application via un autre réseau NTW qui sera généralement un réseau fixe.

Plusieurs architectures de système sont possibles. Ainsi, plusieurs systèmes tels que décrit ci-avant à la figure 1B peuvent être présents. Il est également possible que plusieurs unités de traitement et d'optimisation soient présentes dans un système. Alternativement, un seul système comportant au moins une unité de traitement et d'optimisation peut gérer l'ensemble des nœuds.

L'unité de traitement et d'optimisation 36 comporte une interface 37 d'accès à la base de données DB3 dans laquelle sont stockés des enregistrements concernant les nœuds pris en considération. Un enregistrement k compris dans la base de données DB3 comporte notamment l'adresse ADD₃₂(k) et le secret SS(k) affectés à un nœud k et des informations de pointage P(k) relatives à la séquence des trames qu'il a émises et que l'unité de traitement et d'optimisation 36 a correctement détectées.

Dans une réalisation possible, les informations de pointage P(k) consistent simplement en le numéro de séquence SN(k) le plus élevé qui a été observé par l'unité de traitement et d'optimisation 36 lors du traitement des trames reçues antérieurement du nœud k, c'est-à-dire le numéro de séquence de la trame la plus récente pour le nœud k.

Dans une autre réalisation possible, les informations de pointage P(k) comprennent un numéro de séquence SN(k) et un tableau de bits (bitmap) BM(k) dans lequel un bit de rang q indique si la trame SN(k+q) a été reçue (1) ou non (0).

S'il y a plusieurs unités de traitement et d'optimisation dans le réseau, la base de données DB3 peut être partagée entre ces unités.

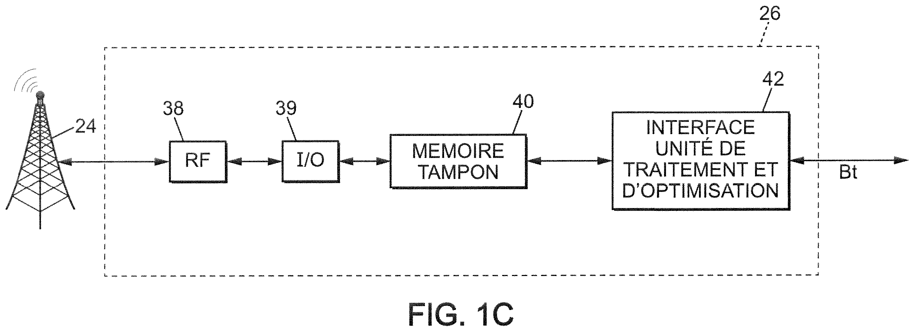

Utilisée comme interface de réception, une interface réseau 26 décrite ici en référence à la figure 1C reçoit de l'antenne 24 des signaux radio en provenance d'un certain nombre de nœuds et les remet à un étage d'émission-réception RF 38 puis à une entrée-sortie 39 qui procèdent à des opérations classiques de filtrage, d'amplification, de démultiplexage et de démodulation pour produire des trames numériques. Ces trames s'accumulent alors dans une mémoire tampon 40 qui les stocke temporairement en attendant qu'elles soient traitées par un dispositif 42 d'interface avec l'unité de traitement et d'optimisation 36. Lorsque la communication vers l'unité de traitement et d'optimisation 36 est disponible, le dispositif 42 extrait des trames de la pile de trames temporairement stockées dans la mémoire tampon 40 et les envoie vers l'unité de traitement et d'optimisation 36.

L'étage d'émission-réception RF peut également être agencé pour évaluer des informations relatives aux conditions de transmission d'une trame reçue. Typiquement, de telles informations ont trait à des niveaux de puissance des signaux reçus, à un horodatage de réception, à un indicatif d'antenne de réception, etc. Ces informations de transmission sont également stockées temporairement dans la mémoire tampon 40 pour être ensuite transmises avec la trame par le dispositif 42 quand l'unité de traitement et d'optimisation 36 est disponible.

Typiquement, cette évaluation est effectuée pour un canal de réception et un indicatif de ce canal peut être compris dans ces informations de transmission. On entend par canal toute information servant à caractériser les propriétés radio du signal : fréquence ou motif de sauts de fréquence, paramètres de modulation, d'étalement et/ou de codage.

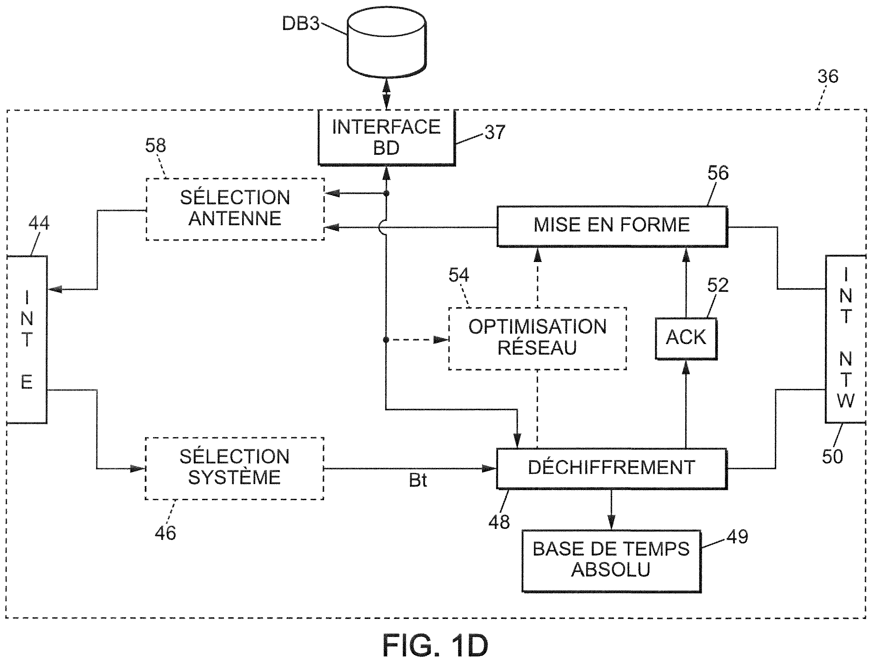

Les trames numériques, éventuellement accompagnées des informations de transmission, sont ensuite reçues par l'unité de traitement et d'optimisation 36, décrit en référence à la figure 1D, via une interface d'entrée/sortie 44. Plusieurs unités de traitement et d'optimisation différentes peuvent avoir à déchiffrer une même trame. En effet, deux antennes différentes peuvent capter une même trame et réorienter ces trames vers deux unités de traitement différentes (au sein d'un même système ou non). Afin de rationaliser la gestion des unités de traitement et d'optimisation, un dispositif de sélection 46 peut être inclus dans les unités de traitement et d'optimisation pour coopérer avec des dispositifs analogues prévus dans les autres unités de traitement afin qu'une seule de ces unités soit utilisée pour le déchiffrement d'une trame donnée. Ce dispositif 46 est représenté en pointillés sur la figure 1D car il est optionnel.

Cette sélection de l'unité de traitement et d'optimisation peut être effectuée en fonction des informations de transmission. Les unités de traitement et d'optimisation peuvent partager entre elles les informations reçues des antennes. Ainsi, la sélection de l'unité de traitement et d'optimisation déchiffrant la trame peut être fonction d'un identifiant d'au moins une antenne ayant reçu la trame et d'un niveau de puissance de la trame reçue par cette antenne. Un indice de performance est calculé par les moyens 46 et comparé à ceux des modules de sélection des autres unités de traitement et d'optimisation. Une fois cette comparaison faite, seule l'unité de traitement et d'optimisation pour laquelle l'indice est le plus élevé autorisera le transfert de la trame au processeur 48. La sélection peut également être effectuée par un algorithme lexicographique selon l'ordre suivant : rapport signal sur bruit ; puissance de réception ; identifiant de l'antenne ayant reçu la trame.

Les trames numériques comprises dans le signal Bt, éventuellement accompagnées des informations de transmission, sont alors transmises au processeur 48 afin d'être déchiffrées. Un module 49 de définition d'une base de temps absolu est utilisé pour la synchronisation des dispositifs utilisés dans le système Rx1. Par exemple, ce module peut être de type GPS pour « global positioning system », système de localisation mondial en français. Comme cela est précisé ci-après en référence aux figures 3 et 4, pour chaque trame déchiffrée, le processeur 48 identifie l'adresse du nœud k à partir duquel cette trame a été envoyée. On rappelle ici qu'à un nœud k est associé un enregistrement k dans la base de données DB3. Les données déchiffrées peuvent ensuite être envoyées à un ou plusieurs serveurs d'application via le réseau NTW.

Plusieurs antennes 26, 30, 34 reliées à une même unité de traitement et d'optimisation 36 dans un système Rxl peuvent avoir reçu la même trame d'un nœud k. Dans un mode de réalisation, correspondant à celui décrit ci-après en référence aux figures 3 et 4, les trames non déchiffrées reçues de plusieurs antennes différentes sont comparées et une sélection parmi les trames identiques est effectuée avant le déchiffrement. Cette sélection renvoie une seule trame, par exemple la première reçue ou celle pour laquelle les informations de transmission relatives à l'antenne l'ayant reçue sont les plus favorables.

Dans une variante, cette même trame est déchiffrée plusieurs fois, pour chaque antenne l'ayant reçu. Les informations de transmission spécifiques à chacune des antennes ayant reçu cette même trame sont alors rassemblées dans l'enregistrement k. Par exemple, un nombre e de sous-enregistrements sont créés au sein de l'enregistrement k pour stocker les informations de transmission relatives aux e antennes ayant capté le signal radio provenant du nœud k. Ces informations sont mises à jour à chaque fois qu'une nouvelle trame est reçue d'un nœud k. Dans un autre exemple, une moyenne des informations de transmission relatives aux e antennes est effectuée puis stockée au sein de l'enregistrement k.

À la réception d'une trame de numéro J, un module 52 de gestion des acquittements du décodeur de trames 36 retourne un acquittement. Un module 22 du nœud Tx1 est couplé à l'étage RF 16 pour recevoir les acquittements et, au besoin, faire réémettre les trames qui n'auraient pas été acquittées après un temps donné. Dans le cas où plusieurs trames identiques sont déchiffrées, un seul acquittement est retourné. Les processus d'acquittement et de répétition sont bien connus de l'homme du métier.

Le contenu exact des informations de pointage P(k) dans la base de données DB3 du système Rxl dépend du mode d'acquittement et de répétition choisi (modules 22 et 52) et de la manière de gérer les pertes de trames.

Pour cette même trame de numéro J, un module 54 d'optimisation centralisée du réseau génère un message d'adaptation d'un paramètre d'émission du nœud k ayant envoyé la trame J. Ce dispositif 54 est représenté en pointillés car il est optionnel. Ce message d'adaptation est généré pour chaque trame déchiffrée en fonction des informations de transmission comprises dans l'enregistrement k stocké sur la base de données DB3, lorsque l'analyse de ces informations de transmission indique que les paramètres de transmission actuels du nœud ne sont pas optimaux. De tels paramètres ne sont pas optimaux lorsque trop de ressources réseau sont consommées par rapport à la qualité de la liaison. Si e sous-enregistrements sont disponibles pour l'enregistrement k, la qualité de réception de la meilleure antenne est retenue pour calculer l'adaptation optimale. Dans le cas où un service supplémentaire, par exemple de localisation du nœud, est activé, alors la qualité de réception des N (typiquement 3) meilleures antennes est utilisée pour effectuer l'adaptation.

Divers paramètres d'émission peuvent ainsi être modifiés. Par exemple, le message d'adaptation peut contenir une instruction pour modifier la puissance d'émission, le facteur d'étalement de spectre, la redondance du codage, la vitesse de transmission des informations, etc.

Le message d'acquittement généré par le module 52 et le message d'adaptation généré par le dispositif 54 sont ensuite mis en forme dans une trame, dite « d'acquittement », par le processeur 56. Cette trame d'acquittement peut également comprendre des instructions (par exemple, passer en mode de reporting haute fréquence) de la part des serveurs d'application connectés au réseau NTW et destinataires des données venant des nœuds.

Le déchiffrement des trames Bt par le processeur 48 peut être relativement long (par exemple de l'ordre de 1 s). L'envoi des trames d'acquittement mises en forme par le module 56 est donc retardé par rapport à une procédure traditionnelle d'envoi de ces acquittements. Les nœuds bidirectionnels, dans les réseaux classiques, se mettent en écoute immédiatement après chaque transmission. Ceci est sous-optimal du point de vue de la consommation de l'énergie dans le cas d'un délai de traitement plus long.

Ainsi, dans un mode de réalisation, après l'envoi d'une trame, un nœud qui attend un acquittement ne va pas continuer à écouter, mais plutôt entrer immédiatement en mode veille pendant une durée prédéterminée (typiquement environ une seconde). Pendant ce temps de sommeil, l'unité de traitement et d'optimisation dispose de suffisamment de temps pour traiter complètement la trame. L'éventuel retard supplémentaire causé par les étapes de traitement susmentionnées est donc avantageusement pris en compte.

D'autres fenêtres d'écoute du nœud peuvent être paramétrées. Par exemple, une première fenêtre d'écoute peut être ouverte par le nœud une seconde après l'envoi et une seconde fenêtre d'écoute peut être ouverte cinq secondes après l'envoi. Ceci donne une plus grande latitude pour gérer le taux d'occupation du réseau, ce paramètre étant fortement contraint par la règlementation des fréquences. Le taux d'occupation de certaines fréquences peut par exemple être limité à 1%.

Ces fenêtres d'écoute peuvent également être périodiques (une seconde après dernière transmission, puis toutes les secondes jusqu'à un nombre maximum de fenêtres qui peut également être connu de la base de données comportant les enregistrements). Une pluralité de fenêtres de réception sur une période totale importante permet de lisser le trafic des systèmes, qui sont contraints par les règles d'utilisation de spectre à un taux d'activité maximum.

L'envoi des acquittements peut être encore retardé afin de laisser le temps aux serveurs connectés au réseau NTW de traiter les données et d'envoyer à l'unité de traitement et d'optimisation 36 une instruction pour le nœud. Si d'autres tâches de traitement doivent être effectuées, le retard peut encore être rallongé. Par exemple, une triangulation peut nécessiter le traitement de données reçues d'une pluralité d'antennes.

La gestion temporelle des acquittements décrite ci-avant peut être mise en œuvre pour tout type de procédé de décodage. Cette gestion est particulièrement avantageuse quand le procédé implique un temps de traitement long.

Si la trame pour laquelle le message d'acquittement a été généré avait été reçue par plusieurs antennes, des informations de transmission relatives à chacune de ces antennes sont disponibles dans les e sous-enregistrements. Dans cette situation, un dispositif 58 de sélection d'une meilleure antenne compare ces informations de transmission et en déduit la meilleure antenne pour transmettre la trame d'acquittement. Ce dispositif 58 est représenté en pointillés car il est optionnel. Les paramètres d'émission de la trame d'acquittement (puissance émise, modulation, degré de redondance, etc.) par l'antenne sélectionnée peuvent également être avantageusement déduits des informations de transmission disponibles dans les e sous-enregistrements et relatives à chacune des antennes. De même, l'horodatage d'émission souhaité de la trame à émettre peut être calculé en fonction du taux courant d'occupation spectrale du canal d'émission choisi et des fenêtres d'écoute mentionnées ci-avant. La trame d'acquittement est ensuite transmise via l'interface 44 à l'interface réseau associée à l'antenne sélectionnée, par exemple à l'interface réseau 26.

La trame d'acquittement est reçue par l'interface réseau 26, décrite ici en référence à la figure 1C, via l'interface 42 avec l'unité d'optimisation et de traitement. La mémoire tampon 40 stocke temporairement les trames d'acquittement à envoyer. Une entrée-sortie 39 et un étage d'émission-réception RF de l'interface 26 préparent ensuite l'envoi de ces trames en respectant les paramètres d'émission définis par le dispositif 58, y compris l'instant d'émission de la trame.

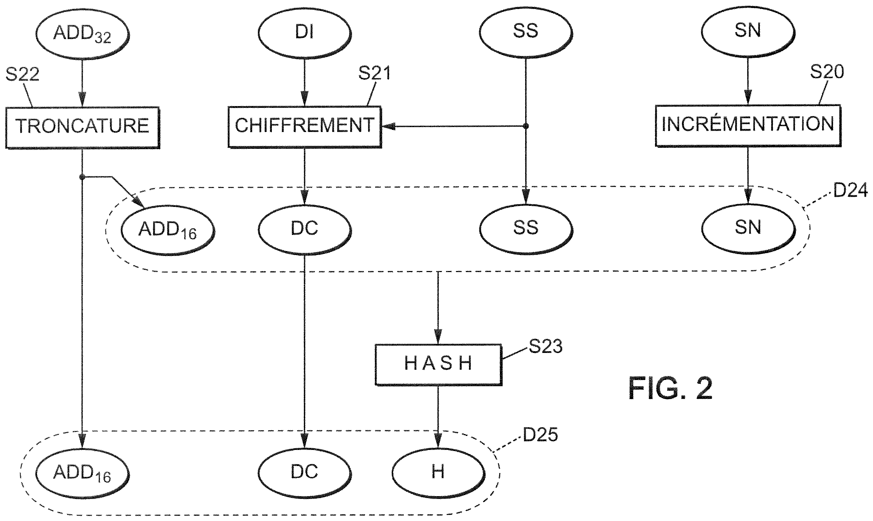

Les données d'entrée du processeur 14 pour la construction d'une trame numérique incluent, comme le montre la partie supérieure de la figure 2 :
- l'adresse ADD₃₂ lue dans la mémoire 20 ;
- des données d'intérêt DI à transmettre, en provenance du capteur 12 ;
- le secret SS lu dans la mémoire 20 ;
- le numéro de séquence SN à affecter à la trame, correspondant au numéro lu dans la mémoire 20 et incrémenté d'une unité (étape S20).

Une étape S21 du traitement appliqué par le processeur 14 consiste à chiffrer les données d'intérêt DI au moyen du secret SS affecté au nœud. Un tel chiffrement peut utiliser un algorithme de chiffrement symétrique classiquement utilisé dans les techniques cryptographiques, par exemple AES 128 (Advanced Encryption Standard, « standard de chiffrement avancé » en français).

Une étape S22 du traitement appliqué par le processeur 14 consiste à tronquer l'adresse ADD₃₂ affectée à au nœud Tx1. Par exemple, l'adresse de 32 bits affectée au nœud Tx1 est tronquée pour former une donnée d'adresse incomplète de 16 bits, notée ici ADD₁₆. Cette donnée d'adresse incomplète comporte par exemple les seuls 16 bits de poids faible de l'adresse de 32 bits.

Le processeur 14 peut alors former un mot D24 composé des éléments suivants :
- l'adresse ADD₁₆ qui a été tronquée à l'étape S22 ;
- les données d'intérêt chiffrées DC suite à l'étape S21 ;
- le secret SS ;
- le numéro de séquence SN incrémenté à l'étape S20.

À l'étape S23, le processeur 14 calcule un code de hachage H à partir du mot D24. Ce code de hachage est calculé par une fonction de hachage unidirectionnelle classiquement utilisée dans les techniques cryptographiques, par exemple MD5 (« Message Digest 5 »).

Après les étapes S20-S23 précitées, le processeur 14 assemble la trame de signal numérique D25 qui, dans l'exemple considéré, inclut :
- l'adresse ADD₁₆ qui a été tronquée à l'étape S22 ;
- les données d'intérêt chiffrées DC suite à l'étape S21 ;
- le code de hachage H calculé à l'étape S23.

On observe que le numéro de séquence SN n'est pas nécessairement inclus dans les trames à transmettre bien qu'il soit rendu accessible à l'unité de traitement et d'optimisation comme il sera expliqué plus loin. On peut ainsi limiter la taille des trames et optimiser la consommation d'énergie ainsi que l'occupation du canal d'émission.

Du côté de l'unité de traitement et d'optimisation 36, les données d'entrée du processeur 48 pour le traitement d'une trame numérique D25' comprise dans le signal Bt incluent, comme le montre la partie supérieure de la figure 3 :
- l'adresse tronquée ADD₁₆ ;
- les données d'intérêt chiffrées DC ; et
- le code de hachage H.

Une étape S31 d'identification de K enregistrements compris dans la base de données DB3 et correspondant à l'adresse tronquée ADD₁₆ est exécutée par le processeur 48. Cette identification conduit à la sélection d'un certain nombre d'enregistrements parmi les N enregistrements compris sur la base de données DB3. En effet, la donnée d'adresse incomplète ADD₁₆ peut correspondre à une pluralité d'adresses complètes. Par exemple, si cette donnée d'adresse incomplète comporte les seuls 16 bits de poids faible d'une adresse complète de 32 bits, jusqu'à 2³²⁻¹⁶ = 65536 adresses complètes peuvent correspondre à cette donnée d'adresse incomplète.

Comme mentionné ci-avant en référence à la figure 1B, les enregistrements contiennent des informations incluant l'adresse complète ADD₃₂(k) affectée à un nœud k, le secret SS(k) affecté à ce nœud k et des informations de pointage P(k) positionnées par rapport à un numéro de séquence SN(k).

Une étape S32 de vérification du code de hachage H extrait de la trame reçue D25' est exécutée par le processeur 48. Des codes de hachage calculés à partir des enregistrements identifiés à l'étape S31 sont comparés au code de hachage H reçu. Les étapes mises en œuvre lors de cette vérification sont par exemple celles décrites ci-après en référence à la figure 4.

Une étape S33 d'identification d'un enregistrement m (c'est-à-dire d'un nœud m) donnant lieu à un code de hachage identique au code de hachage H extrait de la trame reçue D25' est ensuite mise en œuvre par le processeur 48. Comme précisé ci-après en référence à la figure 4, l'étape S32 est répétée pour les K enregistrements identifiés à l'étape S31 tant qu'aucun code de comparaison n'est identifié. Statistiquement, un seul enregistrement donnera lieu à un code de hachage identique au code de hachage H. L'enregistrement m identifié correspond à un nœud m et comprend donc l'adresse complète ADD₃₂(m) et le secret SS(m) affectés à ce nœud m. Le numéro de séquence SN' de la trame reçue est en outre déduit des étapes S32 et S33.

À l'étape S34, les informations de pointage P(m) sont mises à jour dans l'enregistrement m stocké dans la base de données DB3 relativement à l'adresse ADD₃₂(m), en tenant compte du numéro de séquence SN' qui a été détecté. Les informations de transmission liées à cette trame sont également ajoutées dans l'enregistrement m. Au sein d'un enregistrement m, ces informations peuvent être stockées séparément pour chaque trame déchiffrée ou simplement mises à jour à chaque fois qu'une nouvelle trame est déchiffrée.

Enfin, à l'étape S35, on déchiffre les données chiffrées extraites de la trame reçue à l'aide du secret SS(m) contenu dans l'enregistrement m identifié.

Après les étapes S31-S35 précitées, le processeur 48 transmet des données D26, résultant du traitement de la trame reçue, à un ou plusieurs serveurs d'application via le réseau NTW. Les données D26 transmises pour une trame comportent :
- l'adresse ADD₁₆ reçue dans la trame ;
- le numéro de séquence SN' qui a été identifié à l'étape S33 ;
- les données d'intérêt DI déchiffrées à l'étape S35.

Ces données peuvent également comporter les informations de transmission de la trame reçue.

En référence à la figure 4, on détaille maintenant un exemple de mise en œuvre de l'étape S32 de vérification du code de hachage H extrait de la trame reçue, comportant les étapes suivantes :
- S40 : initialisation à 1 d'une variable de comptage q. Cette variable de comptage q permet de parcourir un ensemble de numéros de séquence postérieurs à celui SN(k) contenu dans les informations de pointage P(k) d'un enregistrement k de la base de données DB3.
- S41 : initialisation à 1 d'une variable de comptage k. Cette variable de comptage k permet de parcourir l'ensemble des K enregistrements identifiés à l'étape S31.
- S42 : formation d'un mot X composé des éléments suivants :
   ∘ l'adresse complète ADD₃₂(k) affectée au nœud k et extraite de l'enregistrement k ;
   ∘ les données chiffrées DC extraites de la trame reçue ;
   ∘ le secret SS(k) affecté au nœud k et extrait de l'enregistrement k ;
   ∘ un entier égal à SN(k) + q. Le numéro de séquence SN(k) est extrait des informations de pointage P(k) comprises dans l'enregistrement k.
- S43 : calcul d'un code de hachage Y à partir du mot X (Y = h(X)). La fonction de hachage h est la même que celle utilisée au niveau du nœud Tx1.
- T44 : vérification que le code de hachage Y est égal au code de hachage H extrait de la trame reçue. Déplacement à l'étape T45 si les codes sont différents, déplacement à l'étape S33 sinon.
- T45 : vérification que la variable de comptage k n'est pas égale au nombre maximum K d'enregistrements identifiés à l'étape S31. Déplacement à l'étape S46 si k est différent de K, déplacement à l'étape T47 sinon.
- S46 : incrémentation d'une unité de la variable de comptage k puis retour à l'étape S42 précitée.
- T47 : vérification que la variable de comptage q n'est pas égale à la valeur maximale Q autorisée pour la variable de comptage q. Le nombre entier Q peut être déterminé en prenant en compte le nombre usuel de trames émises successivement par un nœud, les capacités de calcul disponibles, les capacités de stockage de la base de données, le temps disponible pour le décodage, etc. Déplacement à l'étape S48 si q est différent de Q, déplacement à l'étape S49 (échec) sinon.
- S48 : incrémentation d'une unité de la variable de comptage q puis retour à l'étape S41 précitée.
- S33 : identification d'un nœud m (étape représentée schématiquement sur la figure 3), comprenant
   ∘ S33' : retenir comme index d'enregistrement m l'index k qui a donné un résultat positif lors du test T44 qui précède ;
   ∘ S33" : commander le module 52 de l'unité de traitement et d'optimisation 36 pour qu'il confirme la réception, vers le nœud d'adresse ADD₃₂(m) d'une trame de numéro de séquence SN', et délivrer le numéro SN' pour qu'il soit inclus dans les données de sortie D26.
- S34 (également en référence à la figure 3) : mise à jour des informations de pointage P(m) contenues dans l'enregistrement m de la base de données DB3.
- S49 : échec, aucun enregistrement n'a été identifié.
- S50 : fin.

Dans le cas où les informations de pointage P(k) d'un enregistrement k se limitent au numéro de séquence SN(k) de la dernière trame reçue du nœud k, l'étape S34 consiste simplement à prendre SN(m) = SN'. La vérification des codes de hachage S32 selon la figure 4 ci-dessus traite alors de manière brutale le cas d'une perte de trame. Prenons l'exemple d'une (p+1)-ième trame d'un nœud m qui est reçue par l'unité de traitement et d'optimisation avant la p-ième trame du même nœud m (rupture de séquence ou perte de la trame p). Dans cette situation, la valeur de mise à jour du numéro de séquence comprise dans l'enregistrement m est prise égale à p+1 à l'étape S34. Ainsi, lors du traitement de la prochaine trame émise depuis un nœud k, la boucle parcourant les numéros de séquence débutera à p+2 pour l'enregistrement m. Toute trame provenant du nœud m et ayant pour numéro de séquence p sera donc ignorée. Si, dans le nœud m, le module 22 de gestion des acquittements fait répéter l'envoi de la trame de numéro de séquence p, la répétition sera inutile si la trame suivante p+1 a été émise et correctement reçue. Il convient donc, dans cette situation, de limiter le nombre de répétitions d'une trame. On peut par exemple se limiter à trois répétitions.

Limiter les informations de pointage P(k) au seul numéro de séquence SN(k) de la dernière trame reçue (avec SN(m) = SN' à l'étape S34) convient dans le cas d'un protocole d'acquittement et de répétitions où un nœud n'est autorisé à émettre une trame de numéro SN+1 qu'après avoir reçu l'acquittement de la trame de numéro SN. Dans cette situation, la boucle sur les numéros de séquence (indexée par q sur la figure 4) n'est plus nécessaire, ce qui revient à prendre Q = 1.

Dans une variante du procédé décrit ci-dessus, un tableau de bits (bitmap) BM(k) de longueur Q est compris dans les informations de pointage P(k) d'un enregistrement k en plus du pointeur de numéro de séquence SN(k). Ce tableau est mis à jour conjointement au numéro de séquence SN(k) pour l'enregistrement k = m à l'étape S34.

Ce bitmap BM(k) comprend un bit BM(k)_{q} pour chaque entier q allant de 1 à Q, dont la valeur indique si la trame de numéro de séquence SN(k)+q a déjà été reçue (1) depuis le nœud k ou si elle n'a jamais été reçue (0). Ici, le numéro de séquence SN(k) est celui de la dernière trame d'une suite de trames toutes correctement reçues et qui ont été émises par un même nœud k.

Un test sur le bit BM(k)_{q} peut éventuellement être ajouté (au moins quand q > 1) juste avant l'étape S42 de la figure 4 pour vérifier si la trame ayant pour numéro de séquence SN(k)+q a déjà été reçue du nœud k. Si c'est le cas (BM(k)_{q} = 1), le code de hachage n'est pas calculé, le processeur 48 passant directement au test T45 de fin d'itération dans la boucle.

Dans cette variante, la mise à jour du bitmap BM(m) à l'étape S34 peut consister à :
- positionner à 1 le bit BM(m)_{q} ;
- si tous les BM(m)_{q} sont à 1, prendre r = Q+1 ; sinon repérer le plus petit index r tel que BM(k)ᵣ = 0 ;
- prendre SN(m) = SN(m)+r-1 ;
- avancer le bitmap BM(k) de r-1 positions et y placer r-1 zéros à la fin.

Dans cette variante, une perte de trame ne se produit que si l'unité de traitement et d'optimisation reçoit avec succès une trame p+Q+1 sans avoir réussi à recevoir la trame p et toutes ses répétitions survenues jusqu'à l'émission de la trame p+Q+1. Le nombre Q peut être dimensionné pour rendre ce cas de figure très peu probable. Augmenter Q ne charge pas obligatoirement le processeur 48 de manière excessive dès lors que la grande majorité des trames sont reçues sans perte de séquence.

On notera que de nombreux autres schémas d'acquittement et de gestion des fenêtres de réception des trames sont possibles dans le cadre de la présente invention.

Le code de hachage a généralement pour fonction première de permettre que l'intégrité de la trame puisse être vérifiée lorsqu'elle est décodée. Dans la présente invention, le code de hachage H est bien utilisé pour ce contrôle d'intégrité, mais il est également utilisé pour récupérer d'autres informations utiles qui, de ce fait, n'ont pas besoin d'être explicitement transmises. Ces informations sont :
- les bits de l'adresse ADD₃₂ affectée au nœud dont est issue la trame, qui ne font pas partie de l'adresse tronquée ADD₁₆ comprise dans la trame ;
- le numéro de séquence SN de la trame.

Si l'adresse affectée au nœud est représentée sur 32 bits, le numéro de séquence sur 16 bits et le code de hachage sur 32 bits pour la vérification d'intégrité, la taille des en-têtes des trames transmises est réduite de 80 bits (32+16+32=80 bits) à seulement 48 bits (16+32=48 bits). Dans le cas particulier de données d'intérêt d'un seul bit (alarmes), cela représente une amélioration de (81-49)/81 = 39,5%, permettant de multiplier le nombre de capteurs dans un vaste réseau M2M sur une zone donnée.

La troncature des adresses de nœuds de 32 bits à 16 bits n'est bien entendu qu'un cas particulier auquel l'invention n'est pas limitée. Il y a deux cas extrêmes : (1) la totalité de l'adresse est transmise ; et (2) aucun bit de l'adresse n'est transmis. Dans le cas (1), la charge de calcul du processeur 48 de l'unité de traitement et d'optimisation est minimale (la boucle indexée par k n'est pas nécessaire car le nœud est explicitement identifié), mais la réduction de la taille des en-têtes se limite à celle résultant de l'éventuelle non-transmission du numéro de séquence. Dans le cas (2), les en-têtes ont une très petite taille, mais au détriment de la charge de calcul imposée au processeur 48 qui doit alors parcourir tous les enregistrements de la base. Toute longueur de troncature entre ces deux cas extrêmes est possible, le choix étant fait en fonction du dimensionnement général du réseau M2M et d'un compromis entre taux de compression des en-têtes et la puissance de calcul.

On a décrit ci-avant la formation d'un mot D24 utilisé pour le calcul du code de hachage et comportant l'adresse tronquée ADD₁₆. En variante, ce mot comporte l'adresse complète ADD₃₂ à la place de l'adresse tronquée ADD₁₆ pour le calcul du code de hachage, et c'est alors l'adresse complète ADD₃₂(k) récupérée dans la base de données D23 que le processeur 48 utilisera à l'étape S42 pour composer le mot X à hacher. On peut aussi inclure dans ce mot une adresse tronquée d'une longueur différente.

Une autre variante consiste à inclure le numéro de séquence SN dans les trames émises, l'essentiel de la réduction de la taille des en-têtes étant alors causé par la transmission d'une donnée d'adresse incomplète. On peut aussi inclure dans les trames émises une partie seulement du numéro de séquence SN, par exemple quelques bits de poids faible, le processeur 48 pouvant compléter le numéro à l'aide des informations mises à jour dans sa base de données.

Dans un autre mode de réalisation particulier, l'unité de traitement et d'optimisation effectue des tâches supplémentaires avant de transmettre les données déchiffrées aux serveurs d'application. Ainsi, quand une trame émise par un nœud donné a été reçue par l'intermédiaire de plusieurs antennes, il est possible, au niveau de l'unité de traitement et d'optimisation, d'utiliser la triangulation pour calculer des informations de géolocalisation.

L'utilisation de la base de données de nœuds centralisée DB3 rend par ailleurs possible une utilisation très flexible de l'unité de traitement et d'optimisation :
- chaque nœud peut utiliser une version différente de la couche d'accès au médium (MAC, « médium access control »), indexée dans la base de données centralisée, sans exiger des informations de version MAC qui pourraient encore encombrer les entêtes. Le processeur 48 peut essayer de décoder un paquet en essayant plusieurs couches MAC si nécessaire. Cela facilite notamment les mises à niveau, la maintenance du réseau et l'introduction de nouvelles fonctionnalités.
- des compteurs temporels d'inactivité (« sleep timers » en anglais) en lien avec l'acquittement ACK, et le mécanisme d'acquittement retardé, peuvent être configurés pour chaque capteur.
- des informations de mise à jour relatives aux différentes techniques de chiffrement utilisées (code de hachage, chiffrement des données d'intérêt) peuvent également être intégrées à cette base de données. Ainsi, la mise à jour du système est avantageusement effectuée de manière transparente et fluide (simple mise à jour de la base de données centralisée).

De manière plus générale, le processus de réception, de codage et de décodage peut être adapté à chaque nœud par le biais d'une telle base de données.

La présente invention ne se limite pas aux formes de réalisation décrites ci-avant à titre d'exemples ; elle s'étend à d'autres variantes.

Ainsi, on a décrit ci-avant un mode de réalisation dans lequel les trames comportent des entêtes de 32 ou 16 bits. Bien sûr, la taille et le format de telles trames peuvent changer et prendre par exemple des valeurs de 64 ou 128 bits.

## Revendications

1. Procédé de réception d'une trame de données émise par un noeud dans un réseau relié à plusieurs nœuds
(Txl), dans lequel une adresse (ADD₃₂) et un secret (SSₖ) sont respectivement affectés à chaque nœud, le procédé étant mis en oeuvre par une unité de traitement et d'optimisation comprenant :
- extraire de la trame une donnée d'adresse incomplète (ADD16) obtenue en tronquant par le noeud ayant émis la trame l'adresse affectée au noeud, des données chiffrées et un code de hachage de trame ;
- consulter une base de données ayant des enregistrements respectifs concernant les nœuds, chaque enregistrement concernant un nœud contenant des informations incluant l'adresse et le secret affectés audit noeud ;
- identifier plusieurs enregistrements compris dans la base de données contenant une adresse correspondant à la donnée d'adresse incomplète extraite;
- pour au moins un enregistrement de la base de données identifié :
• calculer au moins un code de hachage à partir d'éléments comprenant les données chiffrées extraites de la trame et le secret contenu dans ledit enregistrement ;
• comparer le code de hachage calculé avec le code de hachage de trame extrait de la trame ; et
- répéter les étapes de calcul et de comparaison du code de hachage pour les enregistrements identifiés tant que les codes de hachage comparés ne coïncident pas;
- sélectionner parmi les enregistrements identifiés, l'enregistrement pour lequel les codes de hachage comparés coïncident ;
- et traiter la trame, le traitement comprenant une identification de l'adresse contenue dans l'enregistrement sélectionné comme étant l'adresse affectée au nœud d'où provient la trame, et un déchiffrement des données chiffrées extraites de la trame à l'aide du secret contenu dans l'enregistrement sélectionné.

2. Procédé selon la revendication 1, dans lequel les éléments pour le calcul du code de hachage pour un enregistrement de la base de données comprennent en outre une partie au moins de l'adresse contenue dans ledit enregistrement.

3. Procédé selon l'une quelconque des revendications précédentes, dans lequel les informations contenues dans l'enregistrement de la base de données concernant un nœud incluent en outre des informations de pointage (P) d'au moins un numéro de séquence d'une trame qui a été reçue et traitée en identifiant l'adresse contenue dans ledit enregistrement,
et dans lequel les éléments à partir desquels au moins un code de hachage pour ledit enregistrement est calculé comprennent en outre un entier déterminé selon les informations de pointage contenues dans ledit enregistrement.

4. Procédé selon la revendication 3, dans lequel le traitement de la trame comprend en outre une détermination d'un numéro de séquence de la trame parmi une séquence de trames émises depuis l'adresse identifiée, et une mise à jour des informations de pointage contenues dans l'enregistrement sélectionné en fonction du numéro de séquence déterminé de la trame.

5. Procédé selon la revendication 4, dans lequel les étapes de calcul et de comparaison du code de hachage sont exécutées plusieurs fois pour au moins un enregistrement de la base de données, avec des entiers respectifs choisis dans un intervalle repéré par les informations de pointage contenues dans ledit enregistrement, et dans lequel, après sélection d'un enregistrement de la base de données, la détermination du numéro de séquence de la trame comprend une identification de l'entier pour lequel les codes de hachage comparés coïncident.

6. Procédé selon l'une quelconque des revendications précédentes, comprenant en outre une évaluation d'un niveau de puissance et/ou d'une information d'horodatage de la trame, et dans lequel le traitement de la trame comprend en outre une mise à jour, dans l'enregistrement concernant le nœud dont l'adresse a été identifiée, d'une information de puissance en fonction du niveau de puissance évalué et/ou de l'information d'horodatage.

7. Procédé selon l'une quelconque des revendications précédentes, comprenant en outre :
- transmettre un message d'adaptation d'au moins un paramètre d'émission au nœud dont l'adresse a été identifiée, ledit message d'adaptation étant généré en fonction d'informations comprises dans l'enregistrement concernant ledit nœud.

8. Procédé d'émission d'une trame de données par un nœud (Tx1), une adresse (ADD₃₂) et un secret (SS) étant affectés au nœud, le procédé étant mis en œuvre par le nœud et comprenant :
- chiffrer des données au moyen du secret affecté au noeud ;
- générer un code de hachage à partir d'éléments comprenant les données chiffrées et le secret affecté au noeud ;
- tronquer l'adresse affectée au nœud pour former une donnée d'adresse incomplète ; et
- inclure les données chiffrées, le code de hachage généré, et la donnée d'adresse incomplète dans la trame émise.

9. Procédé selon la revendication 8, dans lequel les éléments à partir desquels le code de hachage est calculé comprennent en outre un numéro de séquence de la trame émise, et dans lequel ledit numéro de séquence de la trame émise est exclu de la trame émise.

10. Procédé selon la revendication 8, comprenant en outre, suite à l'émission de la trame :
- mettre en veille le nœud pour la réception d'un message d'acquittement pendant une durée prédéterminée.

11. Programme informatique comportant des instructions pour la mise en œuvre du procédé selon l'une quelconque des revendications précédentes, lorsque ces instructions sont exécutées par un processeur.

12. Unité de traitement et d'optimisation (36) pour communiquer avec plusieurs nœuds (Txl), l'unité de traitement et d'optimisation comprenant :
- une interface avec une base de données (DB3) ayant des enregistrements respectifs concernant les nœuds du réseau, chaque enregistrement concernant un nœud contenant des
informations incluant une adresse (ADD₃₂) et un secret (SS) affectés audit noeud ;
- une unité d'extraction pour recevoir une trame de données d'un noeud et en extraire une donnée d'adresse incomplète (ADD16) obtenue en tronquant par le noeud ayant émis la trame l'adresse affectée au noeud, des données
chiffrées et un code de hachage de trame ;
- une unité pour identifier plusieurs enregistrements compris dans la base de données contenant une adresse correspondant à la donnée d'adresse incomplète extraite;
- un vérificateur de code agencé pour effectuer les opérations suivantes pour au moins un enregistrement de la base de données identifié :
• calculer au moins un code de hachage à partir d'éléments comprenant les données chiffrées extraites de la trame reçue et le secret inclus dans les informations dudit enregistrement ;
• comparer le code de hachage calculé avec le code de hachage de trame extrait de la trame reçue ; et
pour répéter les étapes de calcul et de comparaison du code de hachage pour les enregistrements identifiés tant que les codes de hachage comparés ne coïncident pas; et pour sélectionner parmi les enregistrements identifiés, l'enregistrement pour lequel les codes de hachage comparés coïncident ;
- et une unité de déchiffrement de la trame reçue pour exécuter un traitement comprenant une identification de l'adresse contenue dans l'enregistrement sélectionné comme étant l'adresse affectée au nœud d'où provient la trame reçue, et un déchiffrement des données chiffrées extraites de la trame reçue à l'aide du secret contenu dans l'enregistrement sélectionné.

13. Système (Rxl) pour communiquer avec plusieurs nœuds (Txl), le système comprenant :
- une pluralité d'antennes pour la réception de signaux en provenance desdits nœuds, lesdits signaux comportant des trames de données ; et
- une unité de traitement et d'optimisation selon la revendication 12 pour le traitement des trames de données.

14. Nœud (Txl) pour communiquer sur un réseau de télécommunication, une adresse (ADD₃₂) étant affectée au nœud et un secret (SS) étant en outre affecté au nœud, le nœud comprenant :
- une unité de chiffrement de données au moyen du secret affecté au noeud ;
- un générateur de code de hachage, le code de hachage étant généré à partir d'éléments comprenant les données chiffrées et le secret affecté au noeud ; et
- un générateur de trame à émettre, la trame incluant les données chiffrées et le code de hachage généré, la trame comprenant en outre une donnée d'adresse incomplète (ADD₁₆) obtenue en tronquant l'adresse (ADD₃₂) affectée au nœud par le nœud (Tx1).

## Patentansprüche

1. Verfahren zum Empfangen eines Datenframes, welcher durch einen Knoten in einem Netzwerk ausgegeben wird, welches mit mehreren Knoten (Tx1) verbunden ist, wobei eine Adresse (ADD₃₂) und ein Geheimnis (SSₖ) jeweils jedem Knoten zugeordnet sind, wobei das Verfahren durch eine Einheit zum Verarbeiten und Optimieren ausgeführt wird, umfassend:
- Extrahieren aus dem Frame von unvollständigen Adressdaten (ADD16), welche durch Kürzen durch den Knoten, welcher den Frame ausgegeben hat, der dem Knoten zugeordneten Adresse erhalten wird, von verschlüsselten Daten und einem Frame-Hashcode;
- Befragen einer Datenbank, welche jeweilige Einträge aufweist, welche die Knoten betreffen,
wobei jeder einen Knoten betreffende Eintrag Informationen enthält, welche die Adresse und das Geheimnis umfassen, welche dem Knoten zugeordnet sind;
- Identifizieren von mehreren Einträgen, welche in der Datenbank umfasst sind, welche eine Adresse enthalten, welche den extrahierten unvollständigen Adressdaten entspricht;
- für wenigstens einen identifizierten Eintrag in der Datenbank:
∘ Berechnen von wenigstens einem Hashcode ausgehend von Elementen, welche die extrahierten verschlüsselten Daten des Frames und das Geheimnis umfassen, welches in dem Eintrag enthalten ist;
∘ Vergleichen des berechneten Hashcodes mit dem Hashcode des Frames, welcher aus dem Frame extrahiert worden ist: und
∘ Wiederholen der Schritte des Berechnens und des Vergleichens des Hashcodes für die identifizierten Einträge, solange die verglichenen Hashcodes nicht übereinstimmen;
∘ Auswählen aus den identifizierten Einträgen des Eintrags, für welchen die verglichenen Hashcodes zusammenfallen;
- und Verarbeiten des Frames, wobei die Verarbeitung eine Identifikation der Adresse, welche in dem ausgewählten Eintrag enthalten ist, als die dem Knoten, von welchem der Frame stammt, zugeordnete Adresse, und ein Entschlüsseln der verschlüsselten Daten umfasst, welche aus dem Frame mit Hilfe des Geheimnisses extrahiert werden, welches in dem ausgewählten Eintrag enthalten ist.

2. Verfahren nach Anspruch 1, wobei die Elemente für die Berechnung des Hashcodes für einen Eintrag in der Datenbank ferner einen Teil von wenigstens der Adresse umfassen, welche in dem Eintrag enthalten ist.

3. Verfahren nach einem der vorhergehenden Ansprüche, wobei die Informationen, welche in dem Eintrag der Datenbank enthalten sind, welche einen Knoten betreffen, ferner Informationen über einen Zeiger (P) von wenigstens einer Sequenznummer eines Frames umfassen, welcher beim Identifizieren der Adresse, welche in dem Eintrag enthalten ist, empfangen und identifiziert worden ist,
und wobei die Elemente, ausgehend von welchen wenigstens ein Hashcode für den Eintrag berechnet wird, ferner eine Ganzzahl umfassen, welche gemäß den Zeiger-Informationen bestimmt wird, welche in dem Eintrag enthalten sind.

4. Verfahren nach Anspruch 3, wobei das Verarbeiten des Frames ferner ein Bestimmen einer Sequenznummer des Frames aus einer Sequenz von Frames umfasst, welche seit der identifizierten Adresse ausgegeben werden, sowie ein Aktualisieren der Zeiger-Informationen, welche in dem ausgewählten Eintrag enthalten sind, als Funktion der bestimmten Sequenznummer des Frames.

5. Verfahren nach Anspruch 4, wobei die Schritte des Berechnens und des Vergleichens des Hashcodes mehrere Male für wenigstens einen Eintrag der Datenbank mit jeweiligen Ganzzahlen durchgeführt werden, welche in einem Intervall durch die Zeiger-Informationen aufgefunden werden, welche in dem Eintrag enthalten sind, und wobei nach dem Auswählen eines Eintrags der Datenbank die Bestimmung der Sequenznummer des Frames eine Identifikation der Ganzzahl umfasst, für welche die verglichenen Hashcodes übereinstimmen.

6. Verfahren nach einem der vorhergehenden Ansprüche, ferner umfassend eine Evaluierung eines Stärkeniveaus und/oder einer Zeitstempel-Information des Frames, und wobei die Verarbeitung des Frames ferner ein Aktualisieren in dem Eintrag, welcher den Knoten betrifft, dessen Adresse identifiziert worden ist, einer Stärke-Informationen als Funktion des evaluierten Stärkeniveaus und/oder der Zeitstempel-Information umfasst.

7. Verfahren nach einem der vorhergehenden Ansprüche, ferner umfassend:
- Übertragen einer Annahmenachricht von wenigstens einem Ausgabeparameter zu dem Knoten, dessen Adresse identifiziert worden ist, wobei die Annahmenachricht als Funktion von Informationen erzeugt wird, welche in dem Eintrag enthalten sind, welcher den Knoten betrifft.

8. Verfahren zum Ausgeben eines Datenframes durch einen Knoten (Tx1), wobei eine Adresse (ADD₃₂) und ein Geheimnis (SS) dem Knoten zugeordnet sind, wobei das Verfahren durch den Knoten ausgeführt wird und umfasst:
- Verschlüsseln von Daten mittels des Geheimnisses, welches dem Knoten zugeordnet ist;
- Erzeugen eines Hashcodes ausgehend von Elementen, welche die verschlüsselten Daten und das dem Knoten zugeordnete Geheimnis umfassen;
- Kürzen der dem Knoten zugeordneten Adresse, um unvollständige Adressdaten zu bilden; und
- Einschließen der verschlüsselten Daten, des erzeugten Hashcodes und der unvollständigen Adressdaten in den ausgegebenen Frame.

9. Verfahren nach Anspruch 8, wobei die Elemente, ausgehend von welchen der Hashcode berechnet wird, ferner eine Sequenznummer des ausgegebenen Frames umfassen, und wobei die Sequenznummer des ausgegebenen Frames von dem ausgegebenen Frame ausgeschlossen ist.

10. Verfahren nach Anspruch 8, ferner umfassend auf die Ausgabe des Frames folgend:
- Versetzen des Knotens in Stand-By für den Empfang einer Bestätigungsnachricht während einer vorbestimmten Zeitdauer.

11. Computerprogramm, umfassend Anweisungen zum Ausführen des Verfahrens nach einem der vorhergehenden Ansprüche, wenn diese Anweisungen von einem Prozessor durchgeführt werden.

12. Einheit zum Verarbeiten und Optimieren (36) zum Kommunizieren mit mehreren Knoten (Tx1), wobei die Einheit zum Verarbeiten und Optimieren umfasst:
- eine Schnittstelle mit einer Datenbank (DB3), welche jeweilige Einträge aufweist, welche die Knoten des Netzwerks betreffen, wobei jeder einen Knoten betreffende Eintrag Informationen enthält, welche eine Adresse (ADD₃₂) und ein Geheimnis (SS) umfassen, welche dem Knoten zugeordnet sind;
- eine Extraktionseinheit zum Empfangen eines Datenframes von einem Knoten und zum Extrahieren von unvollständigen Adressdaten (ADD16), welche erhalten werden, indem von dem Knoten, welcher den Frame ausgegeben hat, die dem Knoten zugeordnete Adresse gekürzt wird, von verschlüsselten Daten und einem Hashcode des Frames;
- eine Einheit zum Identifizieren von mehreren Einträgen, welche in der Datenbank umfasst sind, welche eine Adresse enthalten, welche den extrahierten unvollständigen Adressdaten entspricht;
- eine Verifikationseinheit für Code, welche dazu eingerichtet ist, die folgenden Operationen für wenigstens einen identifizierten Eintrag in der Datenbank auszulösen:
∘ Berechnen von wenigstens einem Hashcode ausgehend von Elementen, welche die extrahierten verschlüsselten Daten des empfangenen Frames und das Geheimnis umfassen, welche in den Informationen des Eintrags umfasst sind;
∘ Vergleichen des berechneten Hashcodes mit dem Hashcode des Frames, welcher aus dem empfangenen Frame extrahiert worden ist: und
∘ zum Wiederholen der Schritte des Berechnens und des Vergleichens des Hashcodes für die identifizierten Einträge, solange die verglichenen Hashcodes nicht übereinstimmen; und zum
∘ Auswählen aus den identifizierten Einträgen des Eintrags, für welchen die verglichenen Hashcodes zusammenfallen;
- und eine Einheit zum Entschlüsseln des empfangenen Frames, um eine Verarbeitung auszuführen, welche eine Identifikation der Adresse, welche in dem ausgewählten Eintrag enthalten ist, als die dem Knoten, von welchem der empfangene Frame stammt, zugeordnete Adresse, und ein Entschlüsseln der verschlüsselten Daten umfasst, welche aus dem empfangenen Frame mit Hilfe des Geheimnisses extrahiert werden, welches in dem ausgewählten Eintrag enthalten ist.

13. System (Rx1) zum Kommunizieren mit mehreren Knoten (Tx1), wobei das System umfasst:
- eine Mehrzahl von Antennen für den Empfang von Signalen, welche von den Knoten stammen, wobei die Signale Datenframes umfassen; und
- eine Einheit zum Verarbeiten und Optimieren nach Anspruch 12 für das Verarbeiten der Datenframes.

14. Knoten (Tx1) zum Kommunizieren auf einem Telekommunikationsnetzwerk, wobei eine Adresse (ADD₃₂) dem Knoten zugeordnet ist, und dem Knoten ferner ein Geheimnis (SS) zugeordnet ist, wobei der Knoten umfasst:
- eine Einheit zum Verschlüsseln von Daten mittels des dem Knoten zugeordneten Geheimnisses;
- eine Erzeugungseinheit für einen Hashcode, wobei der Hashcode ausgehend von Elementen erzeugt wird, welche die verschlüsselten Daten und das dem Knoten zugeordnete Geheimnis umfassen; und
- eine Erzeugungseinheit für einen auszugebenden Frame, wobei der Frame verschlüsselte Daten und den erzeugten Hashcode umfasst, wobei der Frame ferner unvollständige Adressdaten (ADD₁₆) umfasst, welche erhalten werden, indem die dem Knoten zugeordnete Adresse (ADD₃₂) durch den Knoten (Tx1) gekürzt wird.

## Claims

1. A method for receiving a data frame emitted by a node in a network connected to several nodes (Txl), wherein an address (ADD₃₂) and a secret (SSₖ) are respectively assigned to each node, the method being implemented by a processing and optimisation unit comprising:
- extracting from the frame an incomplete address datum (ADD₁₆) obtained by truncating, by the node having emitted the frame, the address assigned to the node, encrypted data and a frame hash code;
- consulting a database with respective records concerning the nodes, each record relating to a node containing information items including the address and the secret assigned to said node;
- identifying several records comprised in the database containing an address corresponding to the incomplete address datum extracted;
- for at least one identified database record:
- calculating at least one hash code from elements comprising the encrypted data extracted from the frame and the secret contained in said record;
- comparing the calculated hash code with the frame hash code extracted from the frame; and
- repeating the steps of calculating and comparing the hash code for the identified records as long as the compared hash codes do not match;
- selecting from the identified records, the record for which the compared hash codes match;
- and processing the frame, the processing comprising an identification of the address contained in the selected record as the address assigned to the node from which is obtained the frame, and a decryption of the encrypted data extracted from the frame using the secret contained in the selected record.

2. The method according to claim 1, wherein the elements for calculating the hash code for a record of the database further comprise at least part of the address contained in said record.

3. The method according to any one of the preceding claims, wherein the information items contained in the database record relating to a node further include pointing information items (P) of at least one sequence number of a frame which was received and processed by identifying the address contained in said record,
and wherein the elements from which at least one hash code for said record is calculated further comprises an integer determined according to the pointing information items contained in said record.

4. The method according to claim 3, wherein the processing of the frame further comprises determining a sequence number of the frame from a sequence of frames emitted from the identified address, and updating the pointing information items contained in the selected record according to the determined sequence number of the frame.

5. The method according to claim 4, wherein the steps of calculating and comparing the hash code are executed several times for at least one record of the database, with respective integers selected from an interval identified by the pointing information items contained in said record, and wherein, after selecting a record from the database, determining the sequence number of the frame comprises identifying the integer for which the compared hash codes match.

6. The method according to any one of the preceding claims, further comprising evaluating a power level and/or timestamp information item of the frame, and wherein the processing of the frame further comprises an update, in the record concerning the node whose address was identified, of a power information item according to the evaluated power level and/or time-stamping information item.

7. The method according to any one of the preceding claims, further comprising:
- transmitting an adaptation message of at least one transmission parameter to the node whose address was identified, said adaptation message being generated according to information items comprised in the record relating to said node.

8. A method for emitting a data frame by a node (Txl), an address (ADD₃₂) and a secret (SS) being assigned to the node, the method being implemented by the node and comprising:
- encrypting data using the secret assigned to the node;
- generating a hash code from elements comprising the encrypted data and the secret assigned to the node;
- truncating the address assigned to the node to form an incomplete address datum; and
- including the encrypted data, the generated hash code, and the incomplete address datum in the emitted frame.

9. The method according to claim 8, wherein the elements from which the hash code is calculated further comprise a sequence number of the emitted frame, and wherein said sequence number of the emitted frame is excluded from the emitted frame.

10. The method according to claim 8, further comprising, after the emission of the frame:
- making the node enter standby to receive an acknowledgement message for a predetermined period.

11. A computer program including instructions for implementing the method according to any one of the preceding claims, when these instructions are executed by a processor.

12. A processing and optimisation unit (36) to communicate with several nodes (Txl), the processing and optimisation unit comprising:
- an interface with a database (DB3) having respective records relating to the nodes of the network, each record relating to a node containing information items including an address (ADD₃₂) and a secret (SS) assigned to said node;
- an extraction unit for receiving a data frame from a node and extracting therefrom an incomplete address datum (ADD₁₆) obtained by truncating, by the node having emitted the frame, the address assigned to the node, encrypted data and a frame hash code;
- a unit for identifying several records comprised in the database containing an address corresponding to the incomplete address datum extracted;
- a code verifier arranged to perform the following operations for at least one identified database record:
- calculating at least one hash code from elements comprising the encrypted data extracted from the received frame and the secret included in the information items of said record;
- comparing the calculated hash code with the frame hash code extracted from the received frame; and
for repeating the steps of calculating and comparing the hash code for the identified records as long as the compared hash codes do not match; and for
selecting from the identified records, the record for which the compared hash codes match;
- and a unit for decrypting the received frame to execute a processing comprising an identification of the address contained in the selected record as the address assigned to the node from which is obtained the received frame, and a decryption of the encrypted data extracted from the received frame using the secret contained in the selected record.

13. A system (Rxl) for communicating with several nodes (Txl), the system comprising:
- a plurality of antennas for receiving signals from said nodes, said signals including data frames; and
- a processing and optimisation unit according to claim 12 for processing data frames.

14. A node (Txl) for communicating over a telecommunication network, an address (ADD₃₂) being assigned to the node and a secret (SS) being further assigned to the node, the node comprising:
- a unit for encrypting data by means of the secret assigned to the node;
- a hash code generator, the hash code being generated from elements comprising the encrypted data and the secret assigned to the node; and
- a generator of a frame to be emitted, the frame including the encrypted data and the generated hash code, the frame further comprising an incomplete address datum (ADD₁₆) obtained by truncating the address (ADD₃₂) assigned to the node by the node (Txl).
